(19) Europäisches Patentamt / European Patent Office / Office européen des brevets

(11) **EP 3 373 155 A1**

(12) **EUROPEAN PATENT APPLICATION**
published in accordance with Art. 153(4) EPC

(43) Date of publication:
**12.09.2018 Bulletin 2018/37**

(51) Int Cl.:
**G06F 17/30** (2006.01)

(21) Application number: **16861452.7**

(22) Date of filing: **25.10.2016**

(86) International application number:
**PCT/CN2016/103139**

(87) International publication number:
**WO 2017/076184 (11.05.2017 Gazette 2017/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **03.11.2015 CN 201510740419**

(71) Applicant: **Alibaba Group Holding Limited Grand Cayman (KY)**

(72) Inventors:
• **DONG, Chengyu**
 **Hangzhou**
 **Zhejiang 311121 (CN)**
• **ZHU, Jiaji**
 **Hangzhou**
 **Zhejiang 311121 (CN)**
• **ZHANG, Haiyong**
 **Hangzhou**
 **Zhejiang 311121 (CN)**
• **CAO, Feng**
 **Hangzhou**
 **Zhejiang 311121 (CN)**

• **WANG, Yong**
 **Hangzhou**
 **Zhejiang 311121 (CN)**
• **YAO, Wenhui**
 **Hangzhou**
 **Zhejiang 311121 (CN)**
• **WU, Junping**
 **Hangzhou**
 **Zhejiang 311121 (CN)**
• **WU, Yang**
 **Hangzhou**
 **Zhejiang 311121 (CN)**
• **DONG, Yuanyuan**
 **Hangzhou**
 **Zhejiang 311121 (CN)**
• **WU, Dongzheng**
 **Hangzhou**
 **Zhejiang 311121 (CN)**
• **LU, Jing**
 **Hangzhou**
 **Zhejiang 311121 (CN)**

(74) Representative: **Finnegan Europe LLP**
 **1 London Bridge**
 **London SE1 9BG (GB)**

(54) **DATA WRITING METHOD AND DEVICE IN DISTRIBUTED FILE SYSTEM**

(57) The embodiments of the present application provide a data write-in method and apparatus in a distributed file system. The data write-in method in a distributed file system includes: selecting a target replica server from a plurality of replica servers managed by a metadata server according to remaining capacity of the plurality of replica servers; selecting a write-in disk in the target replica server according to remaining capacity of disks managed by the target replica server and load of the disks; and storing write-in data into the write-in disk through the target replica server. Through a two-stage disk selection manner with a metadata server and a replica server, the embodiments of the present application comprehensively consider the remaining capacity of the disks and the load of the disks to determine a disk to store write-in data, which not only prevents the disk from being fully written but also avoids the production of hotspot access on the disk.

EP 3 373 155 A1

Selecting at least one target replica server from a plurality of replica servers managed by a metadata server according to remaining capacity of the plurality of replica servers — 101

Selecting a write-in disk in the target replica server according to remaining capacity of disks managed by the target replica server and load of the disks — 102

Storing write-in data into the write-in disk through the target replica server — 103

**FIG. 1**

## Description

The present application claims the priority to the Chinese patent application entitled "Data write-in method and apparatus in a distributed file system" filed on 03 November 2015 with the application NO. 201510740419.5, which is incorporated herein by reference in its entirety.

## Technical field

The present application relates to the technical field of data processing, and especially to a data write-in method in a distributed file system and a data write-in apparatus in a distributed file system.

## Background

In a large-scale online distributed storage system, a single server may contain a lot of disks, and each disk may be different. Moreover, there may also exist a heterogeneous condition within a server, namely a mix of two types of disks with different capacities. A distributed storage system solves the problem of data storage, but how to select a disk to write data into it when the data arrives is a problem that needs to be considered.

A traditional distributed file system uses the consistency hash algorithm to select a disk. The method is a fixed disk selection strategy which selects a disk by doing hashing in advance according to data partition. The hash algorithm itself guarantees balance and usually does not produce hot spots. However, in exceptional cases when data is concentrated in the same data partition, the selected disk would often fail to avoid the large amount of write-ins, and the disk would probably be fully written and lead to write-in failure. Meanwhile, the intensive traffic can produce hotspot access and extend the write-in time.

Therefore, a technical problem that urgently needs to be solved by a person skilled in the art at present is: how to prevent a disk from being fully written and producing hotspot access.

## Summary of Invention

The invention object of embodiments of the present application is to provide a data write-in method in a distributed file system which can prevent a disk from being fully written and producing hotspot access.

Correspondingly, the embodiments of the present application further provide a data write-in apparatus in a distributed file system to ensure the implementation and application of the above-mentioned method.

To solve the above-mentioned problem, the present application discloses a data write-in method in a distributed file system, including:

selecting at least one target replica server from a plurality of replica servers managed by a metadata server according to remaining capacity of the plurality of replica servers;

selecting a write-in disk in the target replica server according to remaining capacity of disks managed by the target replica server and load of the disks; and

storing write-in data into the write-in disk through the target replica server.

Preferably, the step of selecting a write-in disk in the target replica server according to remaining capacity of disks managed by the target replica server and load of the disks includes:

calculating a probability for each disk to be selected according to the remaining capacity of the disks managed by the target replica server and the load of the disks; and

determining the write-in disk according to the probability for each disk to be selected and a preset condition.

Preferably, calculating a probability for each disk to be selected according to the remaining capacity of the disks managed by the target replica server and the load of the disks includes:

calculating a score of the disk according to a proportion of the remaining capacity in the total capacity of the disk and a weight thereof, and according to the load of the disk and a weight thereof; and

normalizing the score of each of the disks to obtain the probability for each of the disks to be selected.

Preferably, calculating a score of the disk according to a proportion between the remaining capacity and total capacity of the disk and a weight thereof and the load of the disk and a weight thereof includes:

respectively calculating a score of the proportion between the remaining capacity and the total capacity of the disk, and a score of the load of the disk, wherein a monotone increasing function relation is satisfied both between the score of the proportion and the proportion and between the score of the load and the load; and

calculating the score of the disk according to the score of the proportion and the weight of the proportion, and according to the score of the load and the weight of the load.

Preferably, the load of the disk is the length of an IO queue of the disk.

Preferably, determining the write-in disk according to the probability for each disk to be selected and a preset condition includes:

calculating a cumulative probability value of each disk according to the probability for each disk to be selected; and

performing binary search on the cumulative probability value of each disk, and considering a disk corresponding to a cumulative probability value of a disk that is found satisfying the preset condition as the write-in disk.

The present application further discloses a data write-in apparatus in a distributed file system, including:

a first selection unit configured to select at least one target replica server from a plurality of replica servers managed by a metadata server according to remaining capacity of the plurality of replica servers;

a second selection unit configured to select a write-in disk in the target replica server according to remaining capacity of disks managed by the target replica server and load of the disks; and

a storage unit configured to store write-in data into the write-in disk through the target replica server.

Preferably, the second selection unit includes:

a probability calculation subunit configured to calculate a probability for each disk to be selected according to the remaining capacity of the disks managed by the target replica server and the load of the disks; and

a determination subunit configured to determine the write-in disk according to the probability for each disk to be selected and a preset condition.

Preferably, the probability calculation subunit includes:

a score calculation subunit configured to calculate a score of the disk according to a proportion between the remaining capacity and total capacity of the disk and a weight thereof and the load of the disk and a weight thereof; and

a probability acquisition subunit configured to normalize the score of each of the disks to obtain the probability for each of the disks to be selected.

Preferably, the score calculation subunit includes:

a first calculation subunit configured to respectively calculate a score of the proportion between the remaining capacity and the total capacity of the disk, and a score of the load of the disk, wherein a monotone increasing function relation is satisfied both between the score of the proportion and the proportion and between the score of the load and the load; and

a second calculation subunit configured to calculate the score of the disk according to the score of the proportion and the weight of the proportion and the score of the load and the weight of the load.

Preferably, the load of the disk is the length of an IO queue of the disk.

Preferably, the determination subunit includes:

a cumulation subunit configured to calculate a cumulative probability value of each disk according to the probability for each disk to be selected; and

a search subunit configured to perform binary search on the cumulative probability value of each disk, and consider a disk corresponding to a cumulative probability value of a disk that is found satisfying the preset condition as the write-in disk.

Compared with the prior art, the embodiments of the present application have the following advantages: through a two-stage disk selection manner with a metadata server and a replica server, the embodiments of the present application comprehensively consider the remaining capacity of the disks and the load of the disks to determine a disk to store write-in data, which not only prevents the disk from being fully written but also avoids the production of hotspot access on the disk; when the load of each disk is basically the same, it is possible to preferentially select a disk with a higher remaining capacity as the write-in disk, thereby being able to prevent the disk from being fully written; and when the remaining capacity is basically the same, it is possible to preferentially select a disk with a lower disk load as the write-in disk, thereby being able to avoid the production of hotspot access on the disk.

**Brief description of the drawings**

Fig. 1 is a step flowchart of an embodiment of a data write-in method in a distributed file system of the present application;

Fig. 2 is a step flowchart of an embodiment of a method for selecting a write-in disk according to remaining capacity of disks managed by a target replica server and load of the disks of the present application;

Fig. 3 is a step flowchart of an embodiment of a method for calculating a probability for each disk to be selected of the present application;

Fig. 4 is a step flowchart of an embodiment of a method for calculating a score of a disk of the present application;

Fig. 5 is a step flowchart of an embodiment of a method for determining a write-in disk according to the probability for each disk to be selected and a preset condition of the present application;

Fig. 6 is a structural block diagram of an embodiment of a data write-in apparatus in a distributed file system of the present application;
Fig. 7 is a structural diagram of an embodiment of a second selection unit of the present application;
Fig. 8 is a structural diagram of an embodiment of a probability calculation subunit of the present application;
Fig. 9 is a structural diagram of an embodiment of a score calculation subunit of the present application; and
Fig. 10 is a structural diagram of an embodiment of a determination subunit of the present application.

**Detailed description**

To make the above-mentioned objects, features and advantages of the present application more obvious and easier to understand, the present application is further described in detail below with reference to the accompanying drawings and the specific implementations.

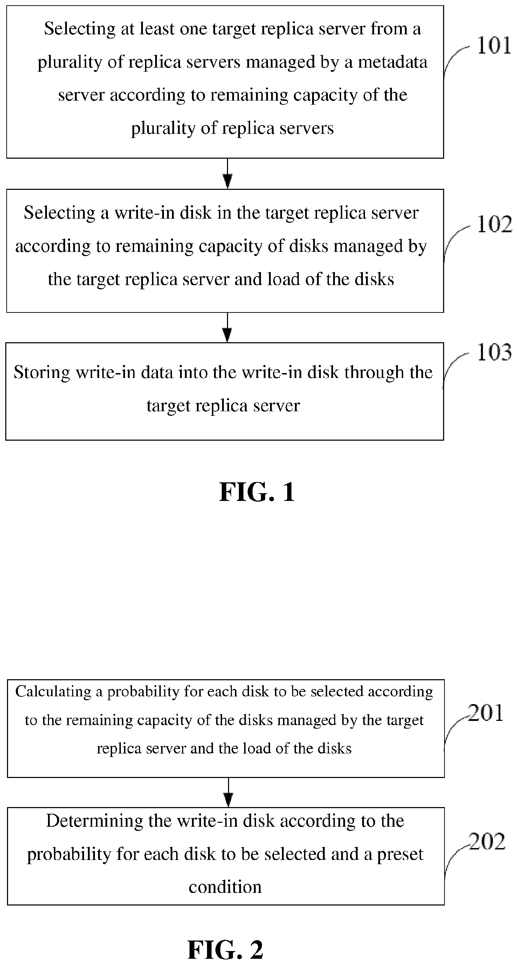

Fig. 1 is a step flowchart of an embodiment of a data write-in method in a distributed file system of the present application, which can specifically include the following steps:

Step 101, selecting at least one target replica server from a plurality of replica servers managed by a metadata server according to remaining capacity of the plurality of replica servers.

In the embodiments of the present application, firstly a metadata server and replica servers are set in the distributed file system, wherein the metadata server is used to manage replica information of name spaces and data blocks and address information of the replica servers; and the replica servers are used to manage local replicas of the data blocks and provide read and write operations on the managed data block replicas.

This embodiment uses a two-stage disk selection mechanism, in which a data write-in apparatus in the distributed file system (hereinafter referred to as the apparatus) firstly selects, in the replica servers managed by the metadata server, a replica server to write data into the replica server (a replica server with large remaining capacity can be selected specifically) and marks it as a target replica server.

Step 102, selecting a write-in disk in the target replica server according to remaining capacity of disks managed by the target replica server and load of the disks.

In this step, after determining the target replica server, the apparatus further selects, in the target replica server, a disk for storing the write-in data and marks it as the write-in disk. The apparatus comprehensively considers the remaining capacity and the load to determine the write-in disk. Specifically, the apparatus can score the remaining capacity and disk load of each disk, obtain the probability for the disk to be selected in conjunction with the respective weight of the remaining capacity and the load, and then determine the write-in disk according to the probability. Please refer to the description of the subsequent embodiments for more details.

Step 103, storing write-in data into the write-in disk through the target replica server.

After determining the write-in disk, the apparatus can store, through the target replica server, the data written by a client end on the write-in disk determined in the previous step.

Through a two-stage disk selection manner with a metadata server and a replica server, the embodiments of the present application comprehensively consider the remaining capacity of the disks and the load of the disks to determine a disk to store the write-in data, which not only prevents the disk from being fully written but also avoids the production of hotspot access on the disk. When the load of each disk is basically the same, it is possible to preferentially select the disk with higher remaining capacity as the write-in disk, thereby being able to prevent the disk from being fully written; and when the remaining capacity is basically the same, it is possible to preferentially select the disk with lower disk load as the write-in disk, thereby being able to avoid the production of hotspot access on the disk.

In another embodiment of the present application, the process of selecting a write-in disk in the target replica server according to remaining capacity of disks managed by the target replica server and load of the disks as shown in Fig. 2 can include:

Step 201, calculating a probability for each disk to be selected according to the remaining capacity of the disks managed by the target replica server and the load of the disks.

In this step, firstly the remaining capacity of each disk managed by the target replica server and the load of each disk are obtained, and then the probability for each disk to be selected is calculated according to the remaining capacity and the load. There are a variety of specific calculation methods, and below is just an example.

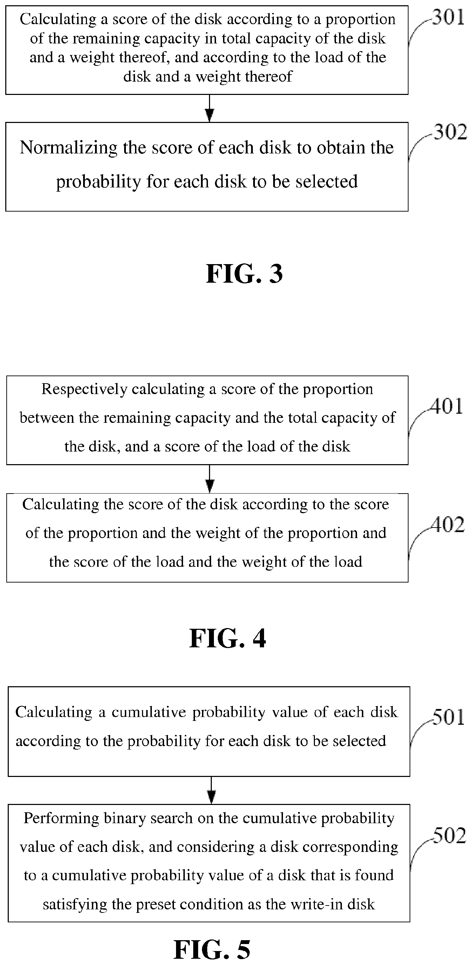

Here, a method for calculating the probability for each disk to be selected can, as shown in Fig. 3, include:

step 301, calculating a score of the disk according to a proportion between the remaining capacity and the total capacity of the disk and a weight thereof and the load of the disk and a weight thereof.

The same method is used for calculation of the score of each disk in the target replica server. It is possible to firstly calculate the score of the proportion according to the proportion and the weight thereof, calculate the score of the load according to the load and the weight thereof, and then obtain the score of the disk by combining the two scores, or obtain the score of the disk by combining the two scores and introducing a specified function relation; it is also possible to firstly calculate the score of the proportion and the score of the load, and then calculate the score of the disk according to their respective weight, wherein a specified function relation can also be introduced to calculate the disk score. Please refer to the description of the subsequent embodiments for more details.

Here, the load of the disk can be measured by the length of an IO queue of the disk, and a greater length of the IO queue of the disk can mean a higher load of the disk.

Step 302, normalizing the score of each disk to obtain the probability for each disk to be selected.

After obtaining the score of each disk, the score is normalized so that the probability for each disk to be selected can be obtained.

Step 202, determining the write-in disk according to the probability for each disk to be selected and a preset condition.

After obtaining the probability for each disk to be selected, the disk of which the probability satisfies the preset condition can be determined as the write-in disk. The preset condition can be autonomously set by a user, etc.

In another embodiment of the present application, a method for calculating the disk score as shown in Fig. 4 can specifically include:

step 401, respectively calculating a score of the proportion between the remaining capacity and the total capacity of the disk and a score of the load of the disk.

Here, a monotone increasing function relation is satisfied both between the score of the proportion and the proportion and between the score of the load and the load. The domain of definition of the monotone increasing function here is from minus infinity to positive infinity, the range of the value domain is from 0 to 1, the shape is of an S pattern, and the function mostly exists in a classification evaluation model and a logic regression model, and belongs to the category of multivariate analysis, e.g. arctan function, etc. In this embodiment, the load of the disk is measured by the length of the IO queue of the disk.

Suppose the target replica server contains N disks, and the proportion between the remaining capacity of each disk and the total capacity of the N disks is successively R1, R2, ..., RN. The length of the current disk IO queue (i.e. the disk load) of the N disks is successively Q1, Q2, ..., QN.

Then the score $S_i(Ri)$ of the proportion between the remaining capacity and the total capacity of the disk and the score $S_i(Qi)$ (i=1, ..., N) of the load of the disk can be obtained through the following equation:

$$S_i\left(x_i\right) = \frac{1}{\pi}\left[\arctan\left(ax_i + b\right) + c\right] + \frac{1}{2}$$

$$a = \frac{6}{high - low}$$

$$b = \frac{-3\left(high - low\right)}{high + low}$$

$$c = -\arctan\left(a \times bottom + b\right)$$

x can be R or Q. That is, a monotone increasing function relation is satisfied both between the score of the proportion and the proportion and between the score of the load and the load. The monotone increasing function can be an arctan function.

Here, high, low and bottom are values determined by experiments. The value of $x_i$ needs to be ensured between (low, high), and therefore $ax_i$ + b ensures that the value range is between (-3, 3). bottom ensures that when $x_i$ is very low, $P_i$ = 0.

As the arctan function is a monotone increasing function, its characteristic is that a relatively high score can mean that the disk has a high proportion of remaining capacity or a low load, whereas a relatively low score can mean that the disk has a low proportion of remaining capacity or a high load.

Step 402, calculating the score of the disk according to the score of the proportion and the weight of the proportion and the score of the load and the weight of the load.

After obtaining the score of the proportion between the remaining capacity and the total capacity of each disk and the score of the load of each disk, in this step, the score of each disk can be calculated in conjunction with the weight of the disk remaining capacity and the weight of the disk load.

$$S_i = S_i\left(R_i\right)^w \times S_i\left(Q_i\right)^{1-w}$$

Here, w is the weight corresponding to the remaining capacity of the disk, and 1-w is the weight of the disk load, and the values of the weights can be autonomously set according to empirical values, etc.

After obtaining the score of each disk according to the above-mentioned steps 401~402, the foregoing step 302 can be performed to normalize the score of each disk and obtain the probability for each disk to be selected.

The scores of the N disks are normalized, and $S_i$ is used to indicate the score of the ith disk, then:

$$\sum_{i=1}^{N} S_i = 1$$

Therefore, the probability $P_i$ for the ith disk to be selected is as shown below:

$$P_i = \frac{S_i}{\frac{1}{N}\sum_{i=1}^{N} S_i}$$

In another embodiment of the present application, the method for determining a write-in disk according to the probability for each disk to be selected and a preset condition as shown in Fig. 5 can include:

step 501, calculating a cumulative probability value of each disk according to the probability for each disk to be selected.

Take the probability Pi for the ith disk to be selected as an example:

$$P_i = \frac{S_i}{\frac{1}{N}\sum_{i=1}^{N} S_i}$$

The probabilities for all disks to be selected are added up to 1.

The cumulative probability value of each disk is defined successively as A1, A2, ..., AN.

$$A_i = \sum_{j=1}^{i} P_j \qquad i=1, \quad \cdots\cdots N_o$$

Therefore, $A_i$ is sorted from small to large, and the value range is [0, 1], with $A_0=0$.

Step 502, performing binary search on the cumulative probability value of each disk, and considering a disk corresponding to a cumulative probability value of a disk that is found satisfying the preset condition as the write-in disk.

In this embodiment, a [0, 1] random number generator can be generated to produce a random number r, then the preset condition is that disk i needs to satisfy $A_{i-1}<r\leq A_i$.

If the apparatus performs binary search on the sorted cumulative probability values of all disks and finds out that disk i satisfies $A_{i-1}<r\leq A_i$, then disk i is determined as the write-in disk. Here, the binary search is also known as half-interval search, and its advantages are less comparison, quick search, and good average performance. The disk satisfying the preset condition can be quickly found in the sorted cumulative probability values by way of binary search.

After the write-in disk is determined, the foregoing step 103 can be performed to store the write-in data.

It should be noted that for simple description, method embodiments are all expressed as combinations of a series of actions. However, a person skilled in the art should know that the embodiments of the present application are not limited by the sequence of the described actions, because according to the embodiments of the present application, some steps can be in another sequence or be performed simultaneously. In addition, a person skilled in the art should also know that the embodiments described in the specification are all preferred embodiments, and the actions involved are not necessarily required by the embodiments of the present application.

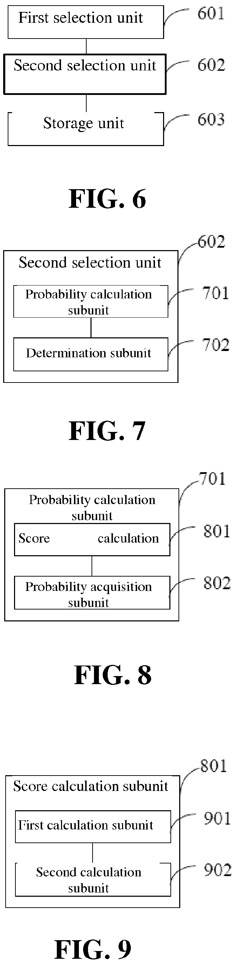

Referring to Fig. 6, a structural diagram of an embodiment of a data write-in apparatus in a distributed file system of the present application is shown and can specifically include the following units:

a first selection unit 601 configured to select at least one target replica server from a plurality of replica servers managed by a metadata server according to remaining capacity of the plurality of replica servers.

A second selection unit 602 configured to select a write-in disk in the target replica server according to remaining capacity of disks managed by the target replica server and load of the disks.

A storage unit 603 configured to store write-in data into the write-in disk through the target replica server.

The embodiments of the present application comprehensively consider the remaining capacity of the disks and the load of the disks through the above-mentioned units to determine a disk to store write-in data, which not only prevents the disk from being fully written but also avoids the production of hotspot access on the disk. When the load of each disk is basically the same, it is possible to preferentially select the disk with higher remaining capacity as the write-in disk, thereby being able to prevent the disk from being fully written; and when the remaining capacity is basically the same, it is possible to preferentially select the disk with lower disk load as the write-in disk, thereby being able to avoid the production of hotspot access on the disk.

In another embodiment, as shown in Fig. 7, the second selection unit 602 can further include:

a probability calculation subunit 701 configured to calculate a probability for each disk to be selected according to the remaining capacity of the disks managed by the target replica server and the load of the disks.

A determination subunit 702 configured to determine the write-in disk according to the probability for each disk to be selected and a preset condition.

As shown in Fig. 8, the probability calculation subunit 701 can further include:

a score calculation subunit 801 configured to calculate a score of the disk according to a proportion between the remaining capacity and total capacity of the disk and a weight thereof and the load of the disk and a weight thereof.

A probability acquisition subunit 802 configured to normalize the score of each of the disks to obtain the probability for each of the disks to be selected.

As shown in Fig. 9, the score calculation subunit 801 can further include:

a first calculation subunit 901 configured to respectively calculate a score of the proportion between the remaining capacity and the total capacity of the disk, and a score of the load of the disk, wherein a monotone increasing function relation is satisfied both between the score of the proportion and the proportion and between the score of the load and the load.

A second calculation subunit 902 configured to calculate the score of the disk according to the score of the proportion and the weight of the proportion and the score of the load and the weight of the load.

Here, the load of the disk is the length of an IO queue of the disk.

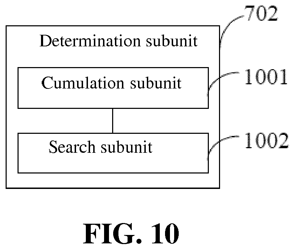

In another embodiment, as shown in Fig. 10, the determination subunit 702 can include:

a cumulation subunit 1001 configured to calculate a cumulative probability value of each disk according to the probability for each disk to be selected.

A search subunit 1002 configured to perform binary search on the cumulative probability value of each disk, and consider a disk corresponding to a cumulative probability value of a disk that is found satisfying the preset condition as the write-in disk.

The embodiments of the present application further provide an electronic device that includes a memory and a processor.

The processor and the memory are connected through a bus; the bus can be an ISA bus, a PCI bus or an EISA bus. The bus can be classified into address bus, data bus, control bus, etc.

Here, the memory is used to store a program. Specifically, the program can include program codes, and the program codes include computer operation instructions. The memory may contain a high speed RAM memory, and may also include a non-volatile memory, e.g. at least one disk memory.

The processor is used to read program codes in the memory and perform the following steps:

selecting at least one target replica server from a plurality of replica servers managed by a metadata server according to remaining capacity of the plurality of replica servers;
selecting a write-in disk in the target replica server according to remaining capacity of disks managed by the target replica server and load of the disks; and storing write-in data into the write-in disk of the memory through the target replica server.

As the apparatus embodiment is basically similar to the method embodiment, the description thereof is relatively simple. For relevant information, please refer to the part of explanation of the method embodiment.

Each of the embodiments in this specification is described in a progressive manner, each embodiment focuses on its difference from other embodiments, and identical or similar parts between the embodiments can be referred mutually.

A person skilled in the art should understand that the embodiments of the present application can be provided as a method, an apparatus, or a computer program product. Therefore, the embodiments of the present application can be in the form of a complete hardware embodiment, a complete software embodiment, or in the form of an embodiment combining software and hardware. Moreover, the embodiments of the present application can be in the form of a computer program product implemented on one or more computer usable storage media (including but not limited to disk memory, CD-ROM, optical memory, etc.) that contain computer usable program codes therein.

In a typical configuration, the computer device includes one or more processors (CPUs), input/output interfaces, network interfaces and memories. The memory may include a non-permanent memory, a random access memory (RAM) and/or a non-volatile memory and other forms in the computer readable medium, such as a read-only memory (ROM) or a flash memory (flash RAM). The memory is an example of a computer readable medium. The computer readable medium includes permanent and non-permanent, movable and non-movable media that can realize information storage by any means or technology. The information can be a computer readable instruction, a data structure, a program module or other data. Examples of a computer storage medium include but are not limited to phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, read-only compact disk read-only memory (CD-ROM), digital versatile disc (DVD) or other optical storage, magnetic tape cassette, magnetic tape magnetic disk storage or other magnetic storage devices or any other non-transmission media. The computer storage medium can be used to store information that can be accessed by computing devices. According to the definition in this specification, the computer readable medium does not include non-persistent computer readable media (transitory media), such as modulated data signals and carriers.

The embodiments of the present application are described in terms of the flowchart and/or block diagram of the method, terminal device (system), and computer program product of the embodiments of the present application. It should be understood that each process and/or block in a flowchart and/or block diagram and the combination of processes and/or blocks in the flowchart and/or block diagram can be realized by computer program instructions. These computer program instructions can be provided to a general-purpose computer, a special-purpose computer, an embedded processor or a processor of other programmable data processing terminal devices to produce a machine, so as to enable the instructions executed by the computer or the processor of other programmable data processing terminal devices to produce an apparatus for realizing a function specified in one or more processes of a flowchart and/or one or more blocks of a block diagram.

These computer program instructions can also be stored in a computer readable memory that can guide a computer or other programmable data processing terminal devices to work in a particular way, so as to enable the instructions stored in the computer readable memory to produce a manufactured article that includes an instruction apparatus. The instruction apparatus realizes a function specified in one or more processes of a flowchart and/or one or more blocks of a block diagram.

These computer program instructions can also be loaded into a computer or other programmable data processing terminal devices, to enable the computer or other programmable terminal devices to perform a series of operation steps to produce the processing realized by the computer, thereby providing a step for realizing a function specified in one or more processes of a flowchart and/or one or more blocks of a block diagram through the instructions executed on the computer or other programmable terminal devices.

Although the preferred embodiments of the present application have been described, a person skilled in the art can make other changes and modifications to these embodiments once he/she learns the basic inventive concept. Therefore, the appended claims are intended to be construed as including the preferred embodiments and all changes and modifications that fall into the scope of the embodiments of the present application.

Finally, it should be further noted that in this specification, relation terms such as the first and the second are merely used for differentiating one entity or operation from another entity or operation, and do not necessarily require or imply any of these practical relations or sequences between these entities or operations. Moreover, the term "comprise," "include" or any other variants thereof is intended to cover a non-exclusive inclusion, which makes a process, method, item or terminal device including a series of elements not only include those elements, but also include other elements that are not explicitly listed, or also include the elements inherent to the process, method, item or terminal device. In the absence of more restrictions, the element defined by the statement "include a" does not rule out other identical elements in the process, method, item or terminal device that includes the elements.

Above is a detailed introduction to the data write-in method in a distributed file system and the data write-in apparatus in a distributed file system provided in the present application. Specific examples are used in this specification to elaborate on the theory and implementation of the present application, and the explanation of the above embodiments is just used to help understand the method of the present application and the core concept thereof. Meanwhile, for a person of ordinary skill in the art, there will be changes to the specific implementation and the range of applications according to the concept of the present application. In summary, the content of this specification should not be understood as a restriction to the present application..

**Claims**

1.  A data write-in method in a distributed file system, **characterized by** comprising the steps of:

    selecting at least one target replica server from a plurality of replica servers managed by a metadata server according to remaining capacity of the plurality of replica servers;
    selecting a write-in disk in the target replica server according to remaining capacity of disks managed by the target replica server and load of the disks; and
    storing write-in data into the write-in disk through the target replica server.

2.  The method according to claim 1, **characterized in that** the step of selecting a write-in disk in the target replica server according to remaining capacity of disks managed by the target replica server and load of the disks comprises:

    calculating a probability for each disk to be selected according to the remaining capacity of the disks managed by the target replica server and the load of the disks; and
    determining the write-in disk according to the probability for each disk to be selected and a preset condition.

3.  The method according to claim 2, **characterized in that** calculating a probability for each disk to be selected according to the remaining capacity of the disks managed by the target replica server and the load of the disks comprises:

    calculating a score of the disk according to a proportion between the remaining capacity and total capacity of the disk and a weight thereof and the load of the disk and a weight thereof; and
    normalizing the score of each of the disks to obtain the probability for each of the disks to be selected.

4.  The method according to claim 3, **characterized in that** calculating a score of the disk according to a proportion between the remaining capacity and total capacity of the disk and a weight thereof and the load of the disk and a weight thereof comprises:

respectively calculating a score of the proportion between the remaining capacity and the total capacity of the disk, and a score of the load of the disk, wherein a monotone increasing function relation is satisfied both between the score of the proportion and the proportion and between the score of the load and the load; and calculating the score of the disk according to the score of the proportion and the weight of the proportion and the score of the load and the weight of the load.

5. The method according to claim 3, **characterized in that** the load of the disk is the length of an IO queue of the disk.

6. The method according to any one of claims 2 to 5, **characterized in that** determining the write-in disk according to the probability for each disk to be selected and a preset condition comprises:

calculating a cumulative probability value of each disk according to the probability for each disk to be selected; and performing binary search on the cumulative probability value of each disk, and considering a disk corresponding to a cumulative probability value of a disk that is found satisfying the preset condition as the write-in disk.

7. A data write-in apparatus in a distributed file system, **characterized by** comprising:

a first selection unit configured to select at least one target replica server from a plurality of replica servers managed by a metadata server according to remaining capacity of the plurality of replica servers; a second selection unit configured to select a write-in disk in the target replica server according to remaining capacity of disks managed by the target replica server and load of the disks; and a storage unit configured to store write-in data into the write-in disk through the target replica server.

8. The apparatus according to claim 7, **characterized in that** the second selection unit comprises:

a probability calculation subunit configured to calculate a probability for each disk to be selected according to the remaining capacity of the disks managed by the target replica server and the load of the disks; and a determination subunit configured to determine the write-in disk according to the probability for each disk to be selected and a preset condition.

9. The apparatus according to claim 8, **characterized in that** the probability calculation subunit comprises:

a score calculation subunit configured to calculate a score of the disk according to a proportion between the remaining capacity and total capacity of the disk and a weight thereof and the load of the disk and a weight thereof; and a probability acquisition subunit configured to normalize the score of each of the disks to obtain the probability for each of the disks to be selected.

10. The apparatus according to claim 9, **characterized in that** the score calculation subunit comprises:

a first calculation subunit configured to respectively calculate a score of the proportion between the remaining capacity and the total capacity of the disk, and a score of the load of the disk, wherein a monotone increasing function relation is satisfied both between the score of the proportion and the proportion and between the score of the load and the load; and a second calculation subunit configured to calculate the score of the disk according to the score of the proportion and the weight of the proportion and the score of the load and the weight of the load.

11. The apparatus according to claim 8, **characterized in that** the load of the disk is the length of an IO queue of the disk.

12. The apparatus according to any one of claims 8 to 11, **characterized in that** the determination subunit comprises:

a cumulation subunit configured to calculate a cumulative probability value of each disk according to the probability for each disk to be selected; and a search subunit configured to perform binary search on the cumulative probability value of each disk, and consider a disk corresponding to a cumulative probability value of a disk that is found satisfying the preset condition as the write-in disk.

Selecting at least one target replica server from a plurality of replica servers managed by a metadata server according to remaining capacity of the plurality of replica servers

101

Selecting a write-in disk in the target replica server according to remaining capacity of disks managed by the target replica server and load of the disks

102

Storing write-in data into the write-in disk through the target replica server

103

**FIG. 1**

Calculating a probability for each disk to be selected according to the remaining capacity of the disks managed by the target replica server and the load of the disks

201

Determining the write-in disk according to the probability for each disk to be selected and a preset condition

202

**FIG. 2**

Calculating a score of the disk according to a proportion of the remaining capacity in total capacity of the disk and a weight thereof, and according to the load of the disk and a weight thereof /301

Normalizing the score of each disk to obtain the probability for each disk to be selected /302

**FIG. 3**

Respectively calculating a score of the proportion between the remaining capacity and the total capacity of the disk, and a score of the load of the disk /401

Calculating the score of the disk according to the score of the proportion and the weight of the proportion and the score of the load and the weight of the load /402

**FIG. 4**

Calculating a cumulative probability value of each disk according to the probability for each disk to be selected /501

Performing binary search on the cumulative probability value of each disk, and considering a disk corresponding to a cumulative probability value of a disk that is found satisfying the preset condition as the write-in disk /502

**FIG. 5**

First selection unit — 601

Second selection unit — 602

Storage unit — 603

**FIG. 6**

Second selection unit — 602

Probability calculation subunit — 701

Determination subunit — 702

**FIG. 7**

Probability calculation subunit — 701

Score calculation — 801

Probability acquisition subunit — 802

**FIG. 8**

Score calculation subunit — 801

First calculation subunit — 901

Second calculation subunit — 902

**FIG. 9**

Determination subunit ⌐702

Cumulation subunit ⌐1001

Search subunit ⌐1002

**FIG. 10**

# INTERNATIONAL SEARCH REPORT

| | International application No. |
|---|---|
| | **PCT/CN2016/103139** |

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT, WPI, EPODOC, CNKI: file, data writing, data reading, element, copy, surplus capacity, balance, weight, distribut+, meta 3w server, disk, load+, capability

## C. DOCUMENTS CONSIDERED TO BE RELEVANT

| Category* | Citation of document, with indication, where appropriate, of the relevant passages | Relevant to claim No. |
|---|---|---|
| Y | CN 104023088 A (SHANDONG UNIVERSITY), 03 September 2014 (03.09.2014), description, paragraphs [0006]-[0021], and figure 1 | 1-12 |
| Y | CN 102629934 A (BEIJING SOHU NEW MEDIA INFORMATION TECHNOLOGY CO., LTD.), 08 August 2012 (08.08.2012), description, paragraphs [0003]-[0034], and figures 1-5 | 1-12 |
| A | CN 101470733 A (CHINA MOBILE COMMUNICATIONS CORPORATION), 01 July 2009 (01.07.2009), the whole document | 1-12 |
| A | CN 102375893 A (INSPUR (BEIJING) ELECTRONIC INFORMATION INDUSTRY CO., LTD.), 14 March 2012 (14.03.2012), the whole document | 1-12 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 December 2016 (05.12.2016) | **07 February 2017 (07.02.2017)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Xiaofei** Telephone No.: (86-10) **62413918** |
|---|---|

Form PCT/ISA/210 (second sheet) (July 2009)

## INTERNATIONAL SEARCH REPORT
### Information on patent family members

International application No.

**PCT/CN2016/103139**

| Patent Documents referred in the Report | Publication Date | Patent Family | Publication Date |
|---|---|---|---|
| CN 104023088 A | 03 September 2014 | None | |
| CN 102629934 A | 08 August 2012 | None | |
| CN 101470733 A | 01 July 2009 | None | |
| CN 102375893 A | 14 March 2012 | None | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510740419